# EUROPEAN PATENT SPECIFICATION

(11) **EP 0 277 014 B1**
(45) Date of publication and mention of the grant of the patent: **20.09.1995**
(21) Application number: 88300723.9
(22) Date of filing: 28.01.1988
(51) Int. Cl.: H04N 7/18

(54) **Service and entertainment communication system**
Dienst- und Unterhaltungsnachrichtensysteme
Systèmes de communication pour service et divertissement

(30) Priority: 30.01.1987 JP 19981/87
(43) Date of publication of application: 03.08.1988
(73) Proprietor: SONY CORPORATION, Tokyo 141 (JP)
(72) Inventor: Tagawa, Koichi, Shinagawa-ku Tokyo 141 (JP); Matsuzaki, Atsushi, Shinagawa-ku Tokyo 141 (JP); Toyoshima, Masakatsu, Shinagawa-ku Tokyo 141 (JP); Kondo, Yoshiyuki, Shinagawa-ku Tokyo 141 (JP)
(74) Representative: Pilch, Adam John Michael

(56) References cited:
- EP-A- 0 144 770
- WO-A-85/02743
- GB-A- 2 102 660
- GB-A- 2 168 880
- US-A- 4 428 078

## Description

This invention relates to service and entertainment systems, embodiments of which may provide apparatus for transmitting a plurality of video and audio signals in parallel to each of a plurality of remote terminal units, each of which may be located at or near a passenger seat of a passenger vehicle such as an aircraft, a train or a bus, or at or near a seat in a stadium or theatre or the like.

It has been proposed, for example, in US patent specification US-A-4 584 603 that video displays be mounted separately on passenger seats of a passenger vehicle, such as an aircraft. In the system of US-A-4 584 603, a plurality of video signals, video game software signals and flight information signals are transmitted in parallel to the video displays, and the video display at each seat selects one of these signals and displays the selected signal. Each signal supplied to the video displays is transmitted through a plurality of independent transmission lines (one transmission line for each respective video display). In order to transmit many signals to each display, many transmission lines are required for each display. Accordingly, the system wiring is very complicated and the arrangement of the overall system is also very complicated.

Another aircraft passenger television system, in which video programmes can be selected by displays mounted on respective passenger seats, has been disclosed in US patent specification US-A-4 647 980. This system, however, is incapable of two-way signal transmission between a central unit and each of a plurality of remote units mounted on passenger seats, and is incapable of transmitting signals other than video programmes from a central unit to a plurality of remote units.

European Patent Application EP-A-0 144 770 describes an interface between a broadcast satellite system and a cable TV system. The broadcast satellite signal includes a base-band video signal and sub-channel digital audio signals phase-shift-key-modulated on a subcarrier. Two modulators modulate respective main carriers of different channels in time-divisionn manner. The signals from the two modulators are mixed and transmitted via a cable TV line. At the receiving end, video signals and audio signals are provided by corresponding frequency-conversion and demodulation, thereby providing a plurality of audio signal channels.

According to the present invention there is provided a service and entertainment system, comprising:
a head end apparatus comprising means for reproducing video signals, means for reproducing audio signals, encoder means for encoding said audio signals, means for modulating said video signals and said encoded audio signals in channels of different frequency bands, respectively, and means for multiplexing said modulated video signals and encoded audio signals, respectively;
cable means for transmitting said multiplexed, modulated video signals and encoded audio signals; and
a plurality of terminal units each positioned away from the head end apparatus, each said terminal unit including a means for selecting at least one of said multiplexed, modulated video signals and encoded audio signals, tuner means coupled to the selecting means for receiving and demodulating said selected video signals and encoded audio signals, a decoder means for decoding said selected encoded audio signals, a display means for displaying the selected video signals, and an audio output terminal for receiving the selected decoded audio signals;
characterised in that:
the head end apparatus also includes means for storing television game software signals and a key activation of which generates a control signal, the encoder means is capable of digitally encoding the television game software signals, the modulator means is capable of modulating the television game software signals in a channel of a respective frequency band, and the multiplexing means is capable of multiplexing the modulated television game software signals and the control signal with the modulated video signals and the modulated audio signals; and
the tuner means of each terminal unit is capable of receiving and demodulating the multiplexed television game software signals and the control signal, the decoder means of each terminal unit is capable of decoding the digitally encoded television game software signals, and each terminal unit is positioned at a different one of a plurality of passenger seats and includes means for storing, processing, and selecting the encoded television game software signals, and means responsive to the control signal to interrupt temporarily execution of a television game at the terminal unit.

In a preferred embodiment of the invention, intended for use in a passenger vehicle such as an aircraft, the video signal reproducing means also generates related audio signals, and the audio signal reproducing means generates separate audio signals. Both types of audio signals are encoded by the encoder means. The tuner means in each terminal unit includes first and second tuners, the first tuner demodulating the video signals, and the second tuner demodulating the audio signals and the television game software signals.

The invention will now be described by way of example with reference to the accompanying drawings, throughout which like parts are referred to by like references, and in which:
Figure 1 is a circuit block diagram of an embodiment of service and entertainment system according to the present invention;
Figure 2 is an enlarged front view of a front panel of a selection and display apparatus used in the Figure 1 embodiment;
Figure 3 is a rear view of two units of selection and display apparatus mounted on different passenger seats; and
Figure 4 is a perspective view of a preferred embodiment of the invention.

Several embodiments of service and entertainment system according to the present invention will now be described with reference to the attached drawings.

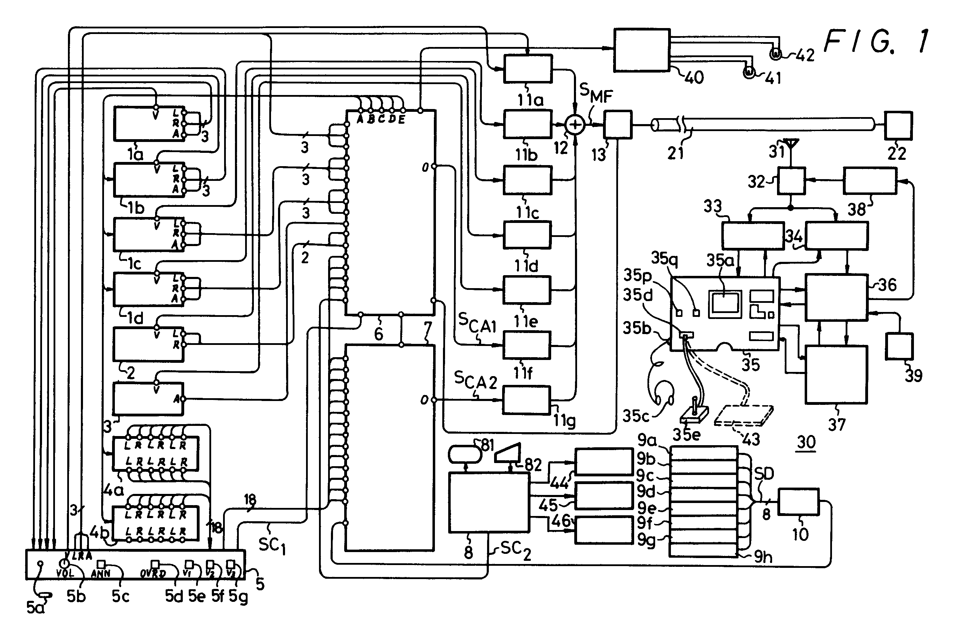

The 'transmitting side' (also referred to as the 'central control portion' or 'central control unit' or 'head end apparatus') of an embodiment will first be described with reference to Figure 1.

The transmitting side may be located in an aircraft crew compartment, and comprises video tape recorders (VTRs) 1a to 1d. The VTR 1a is used for an override operation and may be loaded with a cassette tape explaining how to put on a life-jacket or the like. Each of the VTRs 1a to 1d is loaded with a cassette tape of a video programme such as a film. Each of the VTRs 1a to 1d is respectively provided with a terminal V for supplying a reproduced video signal and with terminals L, R and A for supplying reproduced audio signals. In an embodiment in which the VTRs 1a to 1d store bi-lingual programmes, the terminals L and R are used for supplying left-channel and right-channel audio signals in a first language, respectively, and the terminal A is used for supply a monaural audio signal in a second language.

A television tuner 2 is provided with a terminal V for supplying a video signal, and terminals L and R for suppling the left and right channels of an audio signal, respectively.

A still picture reproducing apparatus 3 is capable of reproducing still picture information recorded in a compact disc (CD) read-only memory (ROM), such as maps, an airport layout drawings, or the like. The still picture reproducing apparatus 3 is provided with a terminal V for supplying a video signal representative of a still picture and a terminal A for suppling an audio signal associated with the still picture.

An audio reproducing apparatus 4a and audio reproducing apparatus 4b each include three sets of CD players and tape recorders. The audio reproducing apparatus 4a and 4b are respectively provided with six pair of terminals L and R for supplying left channel and right channel audio signals.

A controller 5 comprises a microphone 5a, a volume control 5b for adjusting the level of an audio signal received at the microphone 5a, an announce key 5c, an override key 5d and pause keys 5e and 5g for setting the VTRs 1b to 1d into pause mode. Video signals from the respective terminals V of the VTRs 1a and 1b, and audio signals from the respective terminals L, R and A thereof are supplied to the controller 5. The controller 5 is provided with a terminal V for supplying a video signal and terminals L, R and A for supplying audio signals. Usually, the terminals V, L, R and A of the controller 5 supply the video signal from the terminal V of the VTR 1b and the audio signals from the terminals L, R and A of the VTR 1b. However, when the override key 5d is pressed to trigger the override operation, the terminals V, L, R and A of the controller 5 supply the video signal from the terminal V of the VTR 1a and audio signals from the terminals L, R and A of the VTR 1a. When the announce key 5c is pressed to initiate the announce operation, an audio signal from the microphone 5a is supplied to the output terminal A of the controller 5.

CADA encoders 6 and 7 are of the type used in the cable digital audio/data transmission system (CADA system) disclosed in US patent specification US-A-4 684 981. The CADA encoders 6 and 7 are capable of time-division-multiplexing a plurality of digital audio and data signals and transmitting the multiplexed signals over a vacant one channel band width (6 MHz) of a CATV, thus transmitting signals (for example, music) with high efficiency without deteriorating their quality. Each of the encoders 6 and 7 is provided with an analogue-to-digital (A/D) converter and a shift register. The time-division-multiplexing operation is carried out by converting a plurality of audio signals into digital signals in the A/D converter, supplying the digital signals in parallel to the shift register at predetermined locations, and then supplying the digital signals from the shift register in series at a high speed. Not only digital audio signals, but also control data and data comprising computer software can be multiplexed by the encoders 6 and 8 in this manner.

The audio signals supplied to the output terminals L, R and A of the controller 5 are supplied to the encoder 6. The audio signals supplied to the output terminals L, R and A of the VTRs 1c and 1d are also supplied to the encoder 6. The audio signals supplied to the output terminals L and R of the tuner 2 and the output terminal A of the still picture reproducing apparatus 3 are also supplied to the encoder 6. The audio signals supplied to the six pairs of output terminals L and R of the audio reproducing apparatus 4a and the six pairs of output terminals L and R of the audio reproducing apparatus 4b are supplied to the encoders 6 and 7 through the controller 5.

When one of the override key 5d, the announce key 5c, and the pause keys 5e to 5g of the controller 5 is pressed, the controller 5 generates control data SC1 having contents corresponding to the pressed key. The control data SC1 is supplied to the encoder 6.

The encoder 6 has output terminals A to E from each of which a pause control signal is supplied in response to the control data SC1. The VTRs 1b to 1d and the audio reproducing apparatus 4a and 4b are respectively controlled by the pause signals from the terminals A to E of the encoder 6. More specifically, when the override key 5d and the announce key 5c are pressed, the pause control signal is supplied from all of the terminals A to E, so that the VTRs 1b to 1d and the audio reproducing apparatus 4a and 4b all enter a pause mode. When the pause keys 5e to 5g are pressed, pause control signals are supplied from the output terminals A to C, placing the VTRs 1b to 1d into a pause mode, respectively.

A master controller 8 comprises a computer which controls the overall system, and is preferably located in the cabin of the aircraft. The master controller 8 is connected with display 81 and a keyboard 82. The master controller 8 generates control data SC2 (for controlling one or more terminal apparatus units located in the receiving side of the system) in response to a command from the keyboard 82, and supplies control data SC2 to the encoder 6. The control data SC2 may be, for example, data for controlling the luminance of a display in the terminal apparatus, data for polling the conditions of each passenger seat at which a terminal apparatus is located, or other data. The data can be monitored by the display 81 connected to the master controller 8.

Menu data is written in a ROM 9a, and a different set of game data is written in each of ROMS 9b to 9h. Each data signal SD read out from the ROMS 9a to 9h (for example, for use with computer software) is supplied to a signal processing circuit 10 in which, for example, an error correcting code may be added thereto, and is then supplied to the encoder 7.

The control data signals SC1 and SC2 are also supplied to the encoder 7 from the encoder 6.

A time-division-multiplexed signals SCA1 appears at an output terminal 0 of the encoder 6. The signals SCA1 includes the plurality of digitally converted audio signals generated in the encoder 6, and the control data SC1 and SC2 supplied to the encoder 6. The signal SCA1 is supplied to a modulator 11f to be amplitude-modulated,preferably by a vestigial sideband (VSB) system.

A time-division-multiplexed signal SCA2 appears from an output terminal 0 of the encoder 7. The signal SCA2 includes the plurality of digitally converted audio signals generated in the encoder 7, and the control data (SC1 and SC2) and the signal SD supplied to the encoder 7. The signals SCA2 is supplied to a modulator 11g to be amplitude-modulated, preferably by a VSB system.

The video signal supplied to the output terminal V of the controller 5 is supplied to a modulator 11a. The audio signal supplied to the terminal A of the controller 5 is supplied both to the modulator 11a and to the encoder 6. In the modulator 11a, an ordinary television signal is generated by frequency modulating the audio signal and frequency-multiplexing the frequency modulated audio signal with the video signal. This television signal is thereafter amplitude-modulated, preferably by a VSB system.

The video signals supplied to the respective output terminals V of the VTRs 1c and 1d, the tuner 2, and the still picture reproducing apparatus 3 are respectively supplied to modulators 11b to 11e to be amplitude-modulated, preferably by a VSB system.

The modulators 11a to 11g modulate the signals supplied thereto in frequency bands chosen so as to prevent cross-modulation, such as in every other channel above the sixty channels of the television broadcasting band.

Output signals from the modulators 11a to 11g are supplied to an adder 12 in which they are frequency-multiplexed. The frequency-multiplexed signal SMF from the ladder 12 is supplied through a signal distributor 13 to one end of a leaky cable 21. The cable 21 serves as a bi-directional signal transmission means. The other end of the cable 21 terminates at a terminal resistor 22. A coaxial cable whose periphery is spirally indented so as to leak a large amount of signal is suitable for use as the cable 21.

The receiving side of the embodiment will next be described.

Figure 1 shows a terminal apparatus unit 30, of the type that preferably will be mounted on the back of a plurality of passenger seats in an aircraft. Although only one unit 30 is illustrated, preferably there will be the same number of units 30 as there are passenger seats in the aircraft. The unit 30 is provided with an antenna 31 which receives the frequency multiplexed signal SMF leaking from the cable 21. The frequency-multiplexed signal SMF received at the antenna 31 is supplied through a signal distributor 32 to a television tuner 33 and a CADA tuner 34. The tuner 33 is capable of selectively receiving channels in the output frequency bands of the modulators 11a to 11e, while the tuner 34 is capable of selectively receiving channels in the output frequency bands of the modulators 11f and 11g. The tuners 33 and 34 are controlled in their channel selections by a selection and display apparatus 35.

Video and audio signals from the tuner 33 are supplied to the selection and display apparatus 35, and the time-division-multiplexed signal SCA1 and SCA2 from the tuner 34 is supplied to a CADA decoder 36. The decoder 36 is constructed so as to effect substantially the inverse operations to those performed in the encoders 6 and 7. More specifically, the decoder 36 decodes the time-division-multiplexed signal SCA1 or SCA2 or CADA data, produces a desire demultiplexed signal, and supplies it to the selection and display apparatus 35 or a personal computer 37. An example of the decoder 36 is described in above-mentioned US-A-4 684 981.

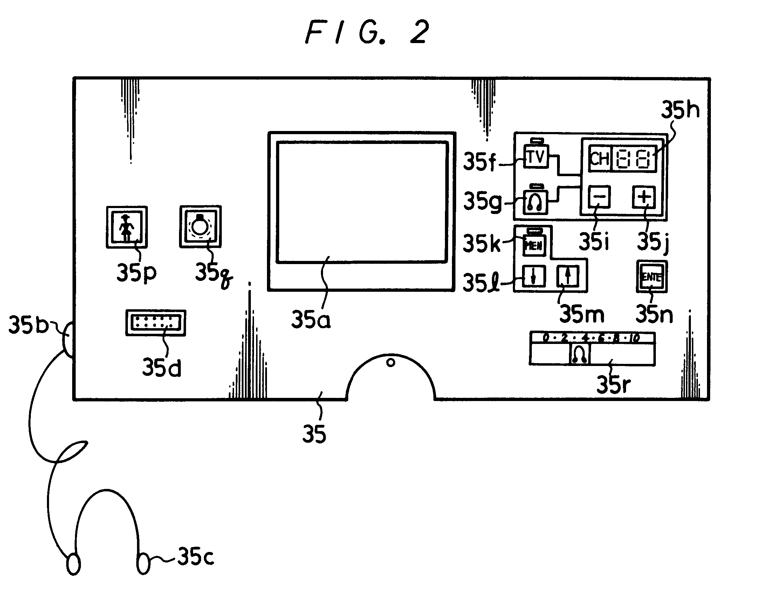

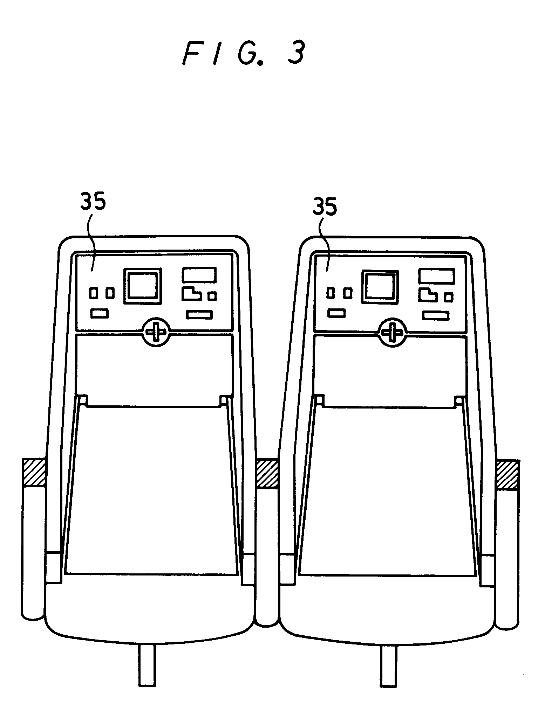

Figure 2 is an example of a preferred arrangement of the panel of the selection and display apparatus 35, which may be mounted on the back of a passenger seat, as shown in Figure 3.

Figure 2 shows a display 35a, which may, for example, comprise a flat cathode ray tube or a liquid crystal display, an audio output terminal 35b for connecting a pair of headphones 35c thereto, and a game terminal 35d for connecting a joy stick 35e or the like (Figure 1) for playing games.

The selection and display apparatus 35 is also provided with a television selecting key 35f, a music selecting key 35g, a channel display 35h, a channel-down key 35i and a channel-up key 35j.

The television channel can be sequentially changed by first pressing the television selecting key 35f and then pressing the channel-down key 35i or the channel-up key 35j. Thus, when the channel received by the television tuner 33 is changed sequentially, the display 35a sequentially displays images reproduced from the video signals derived from the VTRs 1b to 1d, the tuner 2 and the still; picture reproducing apparatus 3, and corresponding audio signals from the decoder 36 are supplied to the audio output terminal 35b. When the audio signals is bi-lingual, two audio channels are assigned for one video display. A first language is supplied from the first channel; and a second language from the second channel.

The music channel can be sequentially changed by first pressing the music selecting key 35g and then pressing the channel-down key 35i or the channel-up key 35j. In this manner, the audio signal from the decoder 36 is changed, and the audio signals from the audio reproducing apparatus 4a and 4b are sequentially supplied to the audio signals output terminal 35b.

The selection and display apparatus 35 is also provided with a menu display key 35k, a cursor-down key 35l, a cursor-up key 35m and an enter key 35n. By pressing the menu key 35k, a video signal based on data from the menu ROM 9a is supplied to the selection and display apparatus 35 from the personal computer 37 and a menu is displayed on the display 35a.

By pressing the enter key 35n after selecting a game by moving the cursor on the display with the cursor-down key 35l and the cursor-up key 35m, a video signal and an audio signals based on data of the selected game from the game ROMs 9b to 9h are supplied from the personal computer 37 to the selection and display apparatus 35. Then, the game is displayed on the display 35a and the game sound signal is supplied to the audio output terminal 35b.

The selection and display apparatus 35 also includes an attendant call key 35p, a reading light key 35q and a volume control 35r.

Referring again to Figure 1, in response to the control data SC1 and SC2 derived from the decoder 36, the selection and display apparatus 35 is controlled by a central processing unit (CPU) (not shown) located within the decoder 36. When the control data SC1 indicates that the override mode has been selected (this selection is made by depressing the override key 5d of the control apparatus 5 located at the transmission side), the tuner 33 is tuned to receive the channel of the output frequency band associated with the modulator 11a, so that a picture based on the video signal produced at the output terminal V of the VTR 1a is displayed on the display apparatus 35a, while the related audio signal produced at the output terminal A of the VTR 1a is fed to the audio output terminal 35b. When the control data SC1 indicates that the announce mode has been selected (this selection is made by actuating the announce key 5c of the control apparatus 5 located at the transmission side), the tuner 33 is also tuned to receive the channel of the output frequency band associated with the modulator 11a, while the audio signal from the microphone 5a is fed to the audio output terminal 35b. In both the announce mode and the override mode, the sound volume to all terminal units may be controlled so as to remain constant.

If the encoder 6 or 7 is disabled, the control data SC1 obtained is the same as the control data SC1 generated to initiate the override mode, so that in this case also, the tuner 33 is forcibly placed in the same reception state as that in which it is placed in the override mode.

In the event that the tuner 33 is placed in this reception state while a television game is being played, execution of the game by the personal computer 37 is interrupted temporarily.

When the announce key 5c is pressed again to terminate the overrride operation or the announce operation, the selection and display apparatus 35 is released from the override condition and is automatically returned to its condition as of initiation of the override or announce operation. At this point, the personal computer 37 may resume execution of a television game. When the selection state (reception state) is overridden (forced into a controlled condition) the channel indicator 35h displays a signal indicative of the forced condition. Alternatively, a special indicator may be provided to perform this function.

On the basis of the control data SC2, the brightness of the display apparatus 35a is automatically controlled in accordance with the brightness of the cabin. When the control data SC2 requests information regarding a terminal unit, a CPU (not shown) within the decoder 36 generates the requested information, which may be indicative of the status of the apparatus 35, or data detected by a sensor 39 and indicative of whether the seat belts are fastened or not, or indicative of the reclining states of passenger seats or the like. Such data is supplied to a transmitter 38, in which it is modulated by a signal having a selected frequency outside the frequency bands of the modulators 11a to 11g. Then the modulated data is supplied through the signal distributor 32 and the antenna 31 to the cable 21. The signal transmitted by the cable 21 is supplied through the signal distributor 13 to the encoder 6 located at the transmitting side, and is fed through the encoder 6 to the master controller 8, in which it is utilized.

If the attendant call key 35p of the selection and display apparatus 35 is depressed, control data is generated from the CPU of the decoder 36. This data is supplied to and modulated by the transmitter 38 and the modulated data signal is then fed through the signal distributor 32 an the antenna 31 to the cable 21. The data signal from the cable 21 is supplied through the signal distributor 13 to the encoder 6 at the transmitting side. On the basis of this data, the CPU (not shown) within the encoder 6 controls a switch box 40 to light a corresponding attendant call lamp 41 (shown in Figure 1). If the reading lamp key 35q of the selection and display apparatus 35 is actuated, control data is generated from the CPU of the decoder 36. Such data is supplied to the transmitter 38, in which it is modulated and then fed through the signal distributor 32 and the antenna 31 to the cable 21. The data from the cable 21 is supplied through the signal distributor 13 to the encoder 6 at the transmitting side. On the basis of this data, the CPU within the encoder 6 controls the switching box 40 to light a corresponding reading light 42.

Moreover, if a keyboard 43 is connected to the game terminal 35d, as shown by a broken line in Figure 1, the CPU within the decoder 36 produces control data. Such control data is supplied to the transmitter 38, in which it is modulated and then fed through the signal distributor 32 and the antenna 31 to the cable 21. The data from the cable 21 is supplied through the signal distributor 12 to the encoder 6 and is further fed from the encoder 6 to the master controller 8. When supplied with this data, the master controller 8 responds by supplying appropriate computer program data (which may be a word processing program, and will hereinafter be referred to as a word processor program, for specificity) to the encoders 6 and 7. This word processor program is then supplied as a frequency-multiplexed signal through the cable 21 to the unit 30 and is then latched into the personal computer 37. In this operating mode, if the user enters sentences or other information by operating the keyboard 43, such sentences or other information are recorded in a random access memory (RAM) of the personal computer 37. The display 35a displays the sentences or other information so that the user can correct them or otherwise process them while viewing them on the display 35a. When the correction, or other processing operation is ended using the keyboard 43, data representing the sentences or other information (converted to ASCII code) from the memory of the personal computer 37 is transmitted through the decoder 36 to the transmitter 38, in which the data is modulated and then fed through the signal distributor 32 and the antenna 31 to the cable 21. The data from the cable 21 is supplied through the signal distributor 13 to the encoder 6 in which it is encoded. The encoded data from the encoder 6 is supplied to the master controller 8. The data may then be supplied to a disc drive 44 in which it is recorded, for example, in floppy disc (not shown). Alternatively, the data may be supplied to a printer 45 where it is printed out, or the data may be transmitted to a remote location via a communication apparatus 46. The user can select any one of the disc drive 44, the printer 45 and the communication apparatus 46 by entry of appropriate commands using the keyboard 43. Such selection commands are supplied to the master controller 8 together with the other word processing data (such as sentences) entered using the keyboard 43. The passenger may also utilize any word processor or other program which was previously written in a ROM (not shown) within the personal computer 37. The passenger may pick up any record generated by the printer 45, for example when the passenger leaves the aircraft.

With the embodiment of the invention described with reference to Figures 1 to 3, video signals from VTRs 1a to 1d, the tuner 2 and the still picture reproducing apparatus 3, the audio signals from the VTRs 1a to 1d, the tuner 2, the still picture reproducing apparatus 3 and the audio reproducing apparatus 4a and 4b, are frequency-multiplexed (in a time-division manner described in US-A-4 684 981) and supplied as signals SCA1 and SCA2 of the CADA encoders 6 and 7. These signals SCA1 and SCA2 are respectively modulated by the modulators 11a and 11g and then added together to form the frequency-multiplexed signal SMF. This frequency-multiplexed signal SMF is supplied to the cable 21 for transmission to the reception side. Upon reception at each unit 30, the selection and display apparatus 35 may select a desired signal from the plurality of video and audio signals transmitted as the frequency-multiplexed signals SMF.

Data generated by actuation of the reading lamp key 35q and the attendant call key 35p, data indicative of the selected status of selection and display apparatus 35 and other data derived from a unit 30, are modulated by the transmitter 38 and then supplied through the signal distributor 32 and the antenna 31 to the cable 21. The data from the cable 21 is supplied through the signal distributor 13 to the encoder 6. On the basis of this data, the CPU within the encoder 6 controls the reading light 42 and the attendant call light 41, for example to turn each on or off. Alternatively, this data is supplied to the master controller 8 in which an audience rating or the like is calculated on the basis of the data supplied.

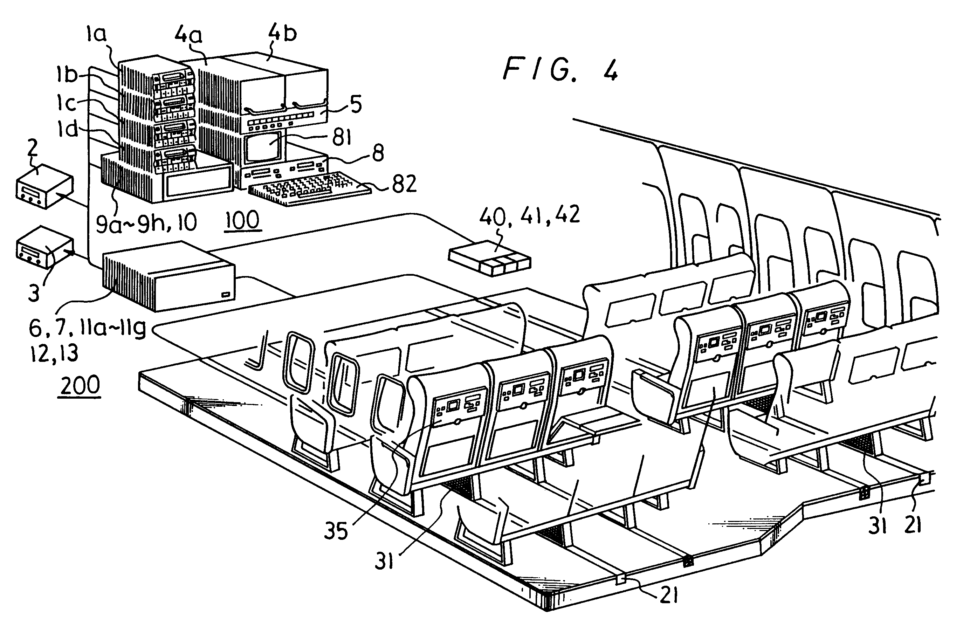

Figure 4 shows the appearance of a preferred embodiment of the present invention which is installed in an aircraft. The parts in the Figure 4 system corresponding to those of Figure 1 are marked with the same reference numerals and will not be described again in detail. The disc drive 44, the printer 45 and the external communication apparatus 46 shown in Figure 1 are, for simplicity, not shown in Figure 4. The ROMs 9a to 9h and the signal processing circuit 10 shown in Figure 1 are all secured in a box 100, while the CADA encoders 6 and 7, modulators 11a to 11g, adder 12, and signal distributor 13 are all secured in a box 200.

Since the plurality of video signals, audio signals, and television game software signals to be transmitted are frequency-multiplexed at the transmission side and supplied through the cable 21 to each unit 30 on the reception side, the overall arrangement is simple, and the signal transmission components are particularly simple, compact, and lightweight. This is particularly advantageous in an aircraft.

With embodiments of the invention, a desired one of a plurality of different video programmes, such as films, digitally reproduced music, and television games can be enjoyed at every passenger seat. Embodiments are thus suitable for use as a service and entertainment system for a passenger vehicle (such as an aircraft) having a plurality of passenger seats.

Moreover, since the audio signals are digitized for transmission as digital signals by the CADA encoders 6 and 7, each user can enjoy music having excellent tone quality, which quality is uniform among the units 30 at the reception side.

While embodiments of the invention can be used as an information transmitting apparatus or service and entertainment system within the cabin of an aircraft as described above, the invention is not limited for use for this purpose, and instead can be implemented in other kinds of passenger vehicles (such as a train or a bus), or in a theatre, stadium, or the like.

While each selection and display apparatus 35 is shown mounted on the rear side of a passenger seat in Figures 3 and 4, each selection and display apparatus 35 may alternatively be provided at other locations near the user, for example at the arm portion of the user's seat or a table portion contained in the user's seat. Alternatively, the selection portion of the terminal apparatus can be provided at the user's arm rest while the display portion is provided on the rear side of the seat ahead of the user.

Since with embodiments of the invention a plurality of video signals and audio signals (and other signals) are frequency-multiplexed and then transmitted through single signal transmitting means, and since the data generated at the reception side is transmitted through the same single signal transmitting means to the transmission side, the system wiring is simple and the hardware can be simplified. This enhances the suitability of the service and entertainment system for use as an information transmitting apparatus for a passenger vehicle, or as a service and information transmitting apparatus located within a theatre, stadium or the like.

## Claims

1. A service and entertainment system, comprising:
a head end apparatus comprising means (1) for reproducing video signals, means (4) for reproducing audio signals, encoder means (6, 7) for encoding said audio signals, means (11) for modulating said video signals and said encoded audio signals in channels of different frequency bands, respectively, and means (12) for multiplexing said modulated video signals and encoded audio signals, respectively;
cable means (21) for transmitting said multiplexed, modulated video signals and encoded audio signals; and
a plurality of terminal units (30) each positioned away from the head end apparatus, each said terminal unit (30) including a means for selecting at least one of said multiplexed, modulated video signals and encoded audio signals, tuner means (33, 34) coupled to the selecting means for receiving and demodulating said selected video signals and encoded audio signals, a decoder means (36) for decoding said selected encoded audio signals, a display means (35a) for displaying the selected video signals, and an audio output terminal (35b) for receiving the selected decoded audio signals;
characterised in that:
the head end apparatus also includes means (9) for storing television game software signals and a key (5c; 5d) activation of which generates a control signal (SC1, SC2), the encoder means (6, 7) is capable of digitally encoding the television game software signals, the modulator means (11) is capable of modulating the television game software signals in a channel of a respective frequency band, and the multiplexing means (12) is capable of multiplexing the modulated television game software signals and the control signal (SC1, SC2) with the modulated video signals and the modulated audio signals; and
the tuner means (33) of each terminal unit (30) is capable of receiving and demodulating the multiplexed television game software signals and the control signal (SC1, SC2), the decoder means (36) of each terminal unit (30) is capable of decoding the digitally encoded television game software signals, and each terminal unit (30) is positioned at a different one of a plurality of passenger seats and includes means for storing, processing, and selecting the encoded television game software signals, and means responsive to the control signal (SC1, SC2) to interrupt temporarily execution of a television game at the terminal unit (30).

2. A system according to claim 1, wherein said audio signals are analogue audio signals and said encoder means (6, 7) converts said analogue audio signals to digital audio signals prior to encoding said audio signals therein, and said decoder means (36) converts said digital audio signals to analogue audio signals prior to decoding said audio signals therein.

3. A system according to claim 2, wherein each terminal unit (30) further comprises antenna means (31) for receiving said multiplexed video signals and audio signals, and a signal distributor (32) connected between said antenna means (31) and said tuner means (33, 34), and each said tuner means (33, 34) includes a first tuner (33) for receiving said video signals and a second tuner (34) for receiving said audio signals.

4. A system according to claim 2, wherein said video signal reproducing means (1) includes a plurality of video cassette recorders (1) and a means (3) for reproducing still video pictures.

5. A system according to claim 4, wherein said video signal reproducing means (1) further includes a television tuner (2).

6. A system according to claim 4, wherein each of said video cassette recorders (1) and said still video picture reproducing means (3) has a video output terminal (V) and an audio output terminal (A), each said video output terminal (V) being connected to said modulator means (11) and each said audio output terminal (A) being connected to said encoder means (6, 7).

7. A system according to claim 1, wherein each terminal unit (30) further comprises a game terminal (35d) to which a game controller (35e) may be connected.

8. A system according to claim 1, wherein said selecting means (35) comprises a channel indicator (35h), a set of channel up and down keys (35i, 35j) for use in selecting any one of said video signals and said audio signals, and a game selecting key (35l, 35m) for selecting any one of said decoded television game software signals.

9. A system according to claim 8, wherein each said terminal unit (30) further comprises a volume control (35r) for controlling the volume of the selected decoded audio signals received at the audio output terminal (35b).

10. A system according to claim 9, further comprising an attendant call light (41) and a reading light (42) provided for each said terminal unit (30), wherein said head end apparatus further comprises control means (40) for controlling each said attendant call light (41), and wherein each terminal unit (30) comprises an attendant call key (35p), a reading light key (35q), means for generating a control signal by actuation of said attendant call key (35p) and said reading light key (35q), and means for sending said control signal to said control means (40) in said head end apparatus through said cable means (21).

11. A system according to claim 10, wherein each terminal unit (30) comprises a panel (35) including said display means (35a), said game terminal (35d), said channel indicator (35h), said channel up and down keys (35i, 35j), said game selecting key (35k), said volume control (35r), said attendant call key (35p) and said reading light key (35q).

12. A system according to claim 11, wherein at least one of said panels (35) is arranged to be mounted on the rear side of a passenger seat in a passenger vehicle.

13. A system according to claim 11 or claim 12, wherein said display means (35a) is a flat cathode ray tube.

14. A system according to claim 11 or claim 12, wherein said display means (35a) is a liquid crystal display.

15. A system according to any one of the preceding claims, wherein said cable means comprises a leaky cable (21).

16. A system according to any one of the preceding claims, wherein each terminal unit (30) is mounted at a respective passenger seat in a passenger vehicle.

17. A system according to claim 16, wherein said passenger vehicle is an aircraft.

18. A system according to claim 16 or claim 17, wherein, in said head end apparatus, said video signal reproducing means (1) is also capable of generating related audio signals, said audio signal reproducing means (4) is operable to generate separate audio signals, and said encoder means (6, 7) is operable to encode both said related and said separate audio signals, and wherein, in each said terminal unit (30), said tuner means (33, 34) comprises a first tuner (33) for receiving and demodulating said selected video signals and a second tuner (34) for receiving and demodulating said selected related audio signals, said selected separate audio signals and said multiplexed television game software signals.

## Patentansprüche

1. Dienstleistungs- und Unterhaltungssystem, welches umfaßt:
eine Kopfstelleneinrichtung, umfassend eine Wiedergabeeinrichtung (1) für Videosignale, eine Wiedergabeeinrichtung (4) für Audiosignale, eine Codiereinrichtung (6, 7) zur Codierung der Audiosignale, Mittel (11) zur Modulation der Videosignale und codierten Audiosignale in jeweilige Kanäle mit unterschiedlichen Frequenzbändern und Mittel (12) zum jeweiligen Multiplexen der modulierten Videosignale und der codierten Audiosignale;
eine Kabeleinrichtung (21) zum Übertragen der modulierten Multiplex-Videosignale und codierten Multiplex-Audiosignale; und
eine Vielzahl von Anschlußeinheiten (30), von denen jede entfernt von der Kopfstelleneinrichtung angeordnet ist, wobei jede Anschlußeinheit (30) eine Einrichtung zur Auswahl von mindestens eines der modulierten Multiplex-Videosignale und codierten Multiplex-Audiosignale, eine Tunereinrichtung (33, 34), welche mit der Auswahleinrichtung zum Empfang und zur Demodulation der ausgewählten Videosignale und codierten Audiosignale gekoppelt ist, eine Decodiereinrichtung (36) zur Decodierung der ausgewählten codierten Audiosignale, eine Anzeigevorrichtung (35a) zur Anzeige der ausgewählten Videosignale und einen Audioausgangsanschluß (35b) zum Empfang der ausgewählten decodierten Audiosignale enthält;
dadurch gekennzeichnet:
daß die Kopfstelleneinrichtung außerdem Mittel (9) zum Speichern von Videospielsoftwaresignalen und eine Tastenaktivierung (5c; 5d), welche ein Steuersignal erzeugt (SC1, SC2), enthält, wobei die Codiereinrichtung (6, 7) die Videospielsoftwaresignale digital codiert, die Modulationseinrichtung (11) die Videospielsoftwaresignale in einen Kanal eines entsprechenden Frequenzbandes moduliert, und die Multiplexeinrichtung (12) die modulierten Videospielsoftwaresignale und das Steuersignal (SC1, SC2) mit den modulierten Videosignalen und den modulierten Audiosignalen multiplext; und
daß die Tunereinrichtung (33) jeder Anschlußeinheit (30) die Multiplex-Videospielsoftwaresignale und das Steuersignal (SC1, SC2) empfängt und demoduliert; daß die Decodierungseinrichtung (36) von jeder Anschlußeinheit (30) die digital codierten Videospielsoftwaresignale decodiert, und daß jede Anschlußeinheit (30) an verschiedenen einer Vielzahl von Fahrgastsitzen angeordnet ist und Mittel zum Speichern, Verarbeiten und Auswählen der codierten Videospielsoftwaresignale und Mittel, welche auf das Steuersignal (SC1, SC2) ansprechen, um vorübergehend die Ausführung eines Fernsehspiels auf der Anschlußeinheit (30) zu unterbrechen, enthält.

2. System nach Anspruch 1, bei welchem die Audiosignale analoge Audiosignale sind, und die Codiereinrichtung (6, 7) die analogen Audiosignale vor der Codierung der Audiosignale in digitale Audiosignale umsetzt, und bei welchem die Decodierungseinrichtung (36) die digitalen Audiosignale vor der Decodierung der Audiosignale in analoge Audiosignale umsetzt.

3. System nach Anspruch 2, bei welchem jede Anschlußeinheit (30) weiterhin eine Antenneneinrichtung (31) zum Empfang der Multiplex-Videosignale und der Multiplex-Audiosignale umfaßt, und ein Signalverteiler (32) zwischen der Antenneneinrichtung (31) und der Tunereinrichtung (33, 34) angeschlossen ist, und bei welchem jede Tunereinrichtung (33, 34) einen ersten Tuner (33) zum Empfang der Videosignale und einen zweiten Tuner (34) zum Empfang der Audiosignale enthält.

4. System nach Anspruch 2, bei welchem die Videosignalwiedergabeeinrichtung (1) eine Vielzahl von Videokassettenrecordern (1) und eine Wiedergabeinrichtung (3) für Videostandbilder enthält.

5. System nach Anspruch 4, bei welchem die Videosignalwiedergabeeinrichtung (1) weiterhin einen Fernsehtuner (2) enthält.

6. System nach Anspruch 4, bei welchem jeder der Videokassettenrekorder (1) und die Videostandbildwiedergabeeinrichtung (3) einen Videoausgangsanschluß (V) und einen Audioausgangsanschluß (A) besitzt, wobei jeder Videoausgangsanschluß (V) mit der Modulationseinrichtung (11) und jeder Audioausgangsanschluß (A) mit der Codiereinrichtung (6, 7) verbunden ist.

7. System nach Anspruch 1, bei welchem jede Anschlußeinheit (30) weiterhin einen Spielanschluß (35d) umfaßt, an welchen ein Spielsteuergerät (35e) angeschlossen werden kann.

8. System nach Anspruch 1, bei welchem die Auswahleinrichtung (35) ein Kanalanzeigegerät (35h), einen Satz von die Kanäle aufwärts und abwärts schaltenden Tasten (35i, 35j) für den Gebrauch zur Auswahl irgendeines der Videosignale und der Audiosignale und eine Spielauswahltaste (35L, 35m) zur Auswahl irgendeines der decodierten Videospielsoftwaresignale umfaßt.

9. System nach Anspruch 8, bei welchem die Anschlußeinheit (30) weiterhin eine Lautstärkesteuerung (35r) zur Steuerung der Lautstärke der ausgewählten decodierten Audiosignale, welche an dem Audioausgangsanschluß (35b) empfangen werden, umfaßt.

10. System nach Anspruch 9, welches weiterhin ein Bedienungspersonruflicht (41) und ein Leselicht (42), welche für jede Anschlußeinheit (30) vorgesehen sind, umfaßt, bei welchem die Kopfstelleneinrichtung weiterhin eine Steuereinrichtung (40) zur Steuerung jedes Bedienungspersonruflichts (41) umfaßt, und bei welchem jede Anschlußeinheit (30) eine Bedienungspersonruftaste (35p), eine Leselichttaste (35q), Mittel zur Erzeugung eines Steuersignals durch Betätigen der Bedienungspersonruftaste (35p) und der Leselichttaste (35q) und Mittel zum Aussenden des Steuersignals über die Kabeleinrichtung (21) zu der Steuereinrichtung (40) in der Kopfstelleneinrichtung umfaßt.

11. System nach Anspruch 10, bei welchem jede Anschlußeinheit (30) ein Schalttafelfeld (35) umfaßt, welches die Anzeigeeinrichtung (35a), den Spielanschluß (35d), das Kanalanzeigegerät (35h), die die Kanäle aufwärts und abwärts schaltenden Tasten (35i, 35j), die Spielauswahltaste (35k), die Lautstärkeregelung (35r), die Bedienungspersonruftaste (35p) und die Leselichttaste (35q) enthält.

12. System nach Anspruch 11, bei welchem mindestens eines der Schalttafelfelder (35) eingerichtet ist, um an der Rückseite eines Fahrgastsitzes in einem Personenbeförderungsmittel angebracht zu werden.

13. System nach Anspruch 11 oder 12, bei welchem die Anzeigeeinrichtung (35a) eine Flachkatodenstrahlröhre ist.

14. System nach Anspruch 11 oder 12, bei welchem die Anzeigevorrichtung (35a) eine Flüssigkristall-Anzeige ist.

15. System nach einem der vorhergehenden Ansprüche, bei welchem jede Kabeleinrichtung ein Leckkabel (21) umfaßt.

16. System nach einem der vorhergehenden Ansprüche, bei welchem jede Anschlußeinheit (30) in jedem einzelnen Fahrgastsitz in einem Personenbeförderungsmittel eingebaut ist.

17. System nach Anspruch 16, bei welchem das Personenbeförderungsmittel ein Flugzeug ist.

18. System nach Anspruch 16 oder 17, bei welchem die Videosignalwiedergabeeinrichtung (1) in der Kopfstelleneinrichtung außerdem verwandte Audiosignale erzeugt, wobei die Audiosignalwiedergabeeinrichtung (4) in der Lage ist, separate Audiosignale zu erzeugen, und die Codiereinrichtung (6, 7) in der Lage ist, sowohl verwandte als auch separate Audiosignale zu codieren, und bei welchem in jeder Anschlußeinheit (30) jede Tunereinrichtung (33, 34) einen ersten Tuner (33) zum Empfang und zum Demodulieren der ausgewählten Videosignale und einen zweiten Tuner (34) zum Empfang und zum Demodulieren der ausgewählten verwandten Audiosignale, der ausgewählten separaten Audiosignale und der Multiplex-Videospielsoftwaresignale umfaßt.

## Revendications

1. Système de desserte et de distraction comprenant:
un appareil d'extrémité de tête comprenant un moyen (1) pour reproduire des signaux vidéo, un moyen (4) pour reproduire des signaux audio, un moyen de codeur (6, 7) pour coder lesdits signaux audio, un moyen (11) pour moduler respectivement lesdits signaux vidéo et lesdits signaux audio codés dans des canaux de différentes bandes de fréquences et un moyen (12) pour multiplexer respectivement lesdits signaux vidéo modulés et lesdits signaux audio codés modulés ; un moyen de câble (21) pour transmettre lesdits signaux vidéo modulés multiplexés et lesdits signaux audio codés modulés multiplexés; et
une pluralité d'unités de terminal (30) dont chacune est positionnée à une certaine distance de l'appareil d'extrémité de tête, chaque dite unité de terminal (30) incluant un moyen pour sélectionner au moins l'un desdits signaux vidéo modulés multiplexés et desdits signaux audio codés modulés multiplexés, un moyen de tuner (33, 34) couplé au moyen de sélection pour recevoir et démoduler lesdits signaux vidéo sélectionnés et lesdits signaux audio codés sélectionnés, un moyen de décodeur (36) pour décoder lesdits signaux audio codés sélectionnés, un moyen d'affichage (35a) pour afficher les signaux vidéo sélectionnés et un terminal de sortie audio (35b) pour recevoir les signaux audio décodés sélectionnés,
caractérisé en ce que :
l'appareil d'extrémité de tête inclut également un moyen (9) pour stocker des signaux de logiciel de jeu de télévision et une touche (5c ; 5d) dont l'activation génère un signal de commande (SC1, SC2), le moyen de codeur (6, 7) permettant de coder numériquement les signaux de logiciel de jeu de télévision, le moyen de modulateur (11) permettant de moduler les signaux de logiciel de jeu de télévision dans un canal d'une bande de fréquence respective et le moyen de multiplexage (12) permettant de multiplexer les signaux de logiciel de jeu de télévision modulés et le signal de commande (SC1, SC2) avec les signaux vidéo modulés et les signaux audio modulés ; et
le moyen de tuner (33) de chaque unité de terminal (30) permettant de recevoir et de démoduler les signaux de logiciel de jeu de télévision multiplexés et le signal de commande (SC1, SC2), le moyen de décodeur (36) de chaque unité de terminal (30) permettant de décoder les signaux de logiciel de jeu de télévision codés numériquement et chaque unité de terminal (30) étant positionnée au niveau d'un siège différent pris parmi une pluralité de sièges de passager et incluant un moyen pour stocker, traiter et sélectionner les signaux de logiciel de jeu de télévision codés, et un moyen sensible au signal de commande (SC1, SC2) pour interrompre temporairement l'exécution d'un jeu de télévision au niveau de l'unité de terminal (30).

2. Système selon la revendication 1, dans lequel lesdits signaux audio sont des signaux audio analogiques et ledit moyen de codeur (6, 7) convertit lesdits signaux audio analogiques en signaux audio numériques avant codage desdits signaux audio en son sein et ledit moyen de décodeur (36) convertit lesdits signaux audio numériques en signaux audio analogiques avant décodage desdits signaux audio en son sein.

3. Système selon la revendication 2, dans lequel chaque unité de terminal (30) comprend en outre un moyen d'antenne (31) pour recevoir lesdits signaux vidéo multiplexés et lesdits signaux audio multiplexés, et un distributeur de signal (32) connecté entre ledit moyen d'antenne (31) et ledit moyen de tuner (33, 34), et chaque dit moyen de tuner (33, 34) inclut un premier tuner (33) pour recevoir lesdits signaux vidéo et un second tuner (34) pour recevoir lesdits signaux audio.

4. Système selon la revendication 2, dans lequel ledit moyen de reproduction de signal vidéo (1) inclut une pluralité d'enregistreurs à cassette vidéo (1) et un moyen (3) pour reproduire des images vidéo fixes.

5. Système selon la revendication 4, dans lequel ledit moyen de reproduction de signal vidéo (1) inclut en outre un tuner de télévision (2).

6. Système selon la revendication 4, dans lequel chacun desdits enregistreurs à cassette vidéo (1) et desdits moyens de reproduction d'image vidéo fixe (3) comporte une borne de sortie vidéo (V) et une borne de sortie audio (A), chaque dite borne de sortie vidéo (V) étant connectée audit moyen de modulateur (11) et chaque dite borne de sortie audio (A) étant connectée audit moyen de codeur (6, 7).

7. Système selon la revendication 1, dans lequel chaque unité de terminal (30) comprend en outre un terminal de jeu (35d) sur lequel un contrôleur de jeu (35e) peut être connecté.

8. Système selon la revendication 1, dans lequel ledit moyen de sélection (35) comprend un indicateur de canal (35h), un jeu de touches de croissance et de décroissance de canal (35i, 35j) destiné à être utilisé lors de la sélection de l'un quelconque desdits signaux vidéo et desdits signaux audio et une touche de sélection de jeu (35l, 35m) pour sélectionner l'un quelconque desdits signaux de logiciel de jeu de télévision décodés.

9. Système selon la revendication 8, dans lequel chaque dite unité de terminal (30) comprend en outre une commande de volume (35r) pour commander le volume des signaux audio décodés sélectionnés reçus au niveau de la borne de sortie audio (35b).

10. Système selon la revendication 9, comprenant en outre une lumière d'appel de personnel de service (41) et une lumière de lecture (42) prévues pour chaque dite unité de terminal (30), dans lequel ledit appareil d'extrémité de tête comprend en outre un moyen de commande (40) pour commander chaque dite lumière d'appel de personnel de service (41) et dans lequel chaque unité de terminal (30) comprend une touche d'appel de personnel de service (35p), une touche de lumière de lecture (35q), un moyen pour générer un signal de commande au moyen de l'actionnement de ladite touche d'appel de personnel de service (35p) et de ladite touche de lumière de lecture (35q), et un moyen pour envoyer ledit signal de commande audit moyen de commande (40) dans ledit appareil d'extrémité de tête par l'intermédiaire dudit moyen de câble (21).

11. Système selon la revendication 10, dans lequel chaque unité de terminal (30) comprend un panneau (35) incluant ledit moyen d'affichage (35a), ledit terminal de jeu (35d), ledit indicateur de canal (35h), lesdites touches de croissance et de décroissance de canal (35i, 35j), ladite touche de sélection de jeu (35k), ladite commande de volume (35r), ladite touche d'appel de personnel de service (35p) et ladite touche de lumière de lecture (35q).

12. Système selon la revendication 11, dans lequel au moins l'un desdits panneaux (35) est agencé pour être monté sur le côté arrière d'un siège de passager dans un véhicule de passagers.

13. Système selon la revendication 11 ou 12, dans lequel ledit moyen d'affichage (35a) est un tube à rayons cathodiques plat.

14. Système selon la revendication 11 ou 12, dans lequel ledit moyen d'affichage (35a) est un affichage à cristaux liquides.

15. Système selon l'une quelconque des revendications précédentes, dans lequel ledit moyen de câble comprend un câble à fuite (21).

16. Système selon l'une quelconque des revendications précédentes, dans lequel chaque unité de terminal (30) est montée au niveau d'un siège de passager respectif dans un véhicule de passagers.

17. Système selon la revendication 16, dans lequel ledit véhicule de passagers est un avion.

18. Système selon la revendication 16 ou 17, dans lequel, dans ledit appareil d'extrémité de tête, ledit moyen de reproduction de signal vidéo (1) peut également générer des signaux audio afférents, ledit moyen de reproduction de signal audio (4) peut fonctionner pour générer des signaux audio séparés et ledit moyen de codeur (6, 7) peut fonctionner pour coder à la fois lesdits signaux afférents et séparés et dans lequel, dans chaque dite unité de terminal (30), ledit moyen de tuner (33, 34) comprend un premier tuner (33) pour recevoir et démoduler lesdits signaux vidéo sélectionnés et un second tuner (34) pour recevoir et démoduler lesdits signaux audio afférents sélectionnés, lesdits signaux audio séparés sélectionnés et lesdits signaux de logiciel de jeu de télévision multiplexés.
